(19) Europäisches Patentamt
European Patent Office
Office européen des brevets

(11) **EP 1 538 469 B1**

(12) **FASCICULE DE BREVET EUROPEEN**

(45) Date de publication et mention
de la délivrance du brevet:
**27.01.2010 Bulletin 2010/04**

(51) Int Cl.:
***G02B 6/02*** *(2006.01)*

(21) Numéro de dépôt: **04292815.0**

(22) Date de dépôt: **29.11.2004**

(54) **Guide optique photosensible**

Lichtempfindlicher optischer Wellenleiter

Photosensitive optical waveguide

(84) Etats contractants désignés:
**AT BE BG CH CY CZ DE DK EE ES FI FR GB GR HU IE IS IT LI LU MC NL PL PT RO SE SI SK TR**

(30) Priorité: **02.12.2003 FR 0314122**

(43) Date de publication de la demande:
**08.06.2005 Bulletin 2005/23**

(73) Titulaire: **Alcatel Lucent**
**75008 Paris (FR)**

(72) Inventeurs:
• **De Barros, Carlos**
**92100 Boulogne-Billancourt (FR)**
• **Provost, Lionel**
**91460 Marcoussis (FR)**
• **Biscaras Hélène**
**78960 Voisins-le-Bretonneux (FR)**
• **Moreau, Christine**
**91120 Palaiseau (FR)**

(74) Mandataire: **Sciaux, Edmond et al**
**Alcatel Lucent**
**Intellectual Property & Standards**
**54 Rue La Boétie**
**75008 Paris (FR)**

(56) Documents cités:
EP-A- 1 359 442    WO-A-97/26571
US-A- 5 852 690    US-A- 5 881 197
US-A- 6 005 999

• HOLMES M J ET AL: "Novel fiber design for narrow-band symmetric response sidetap filters with suppressed leaky mode resonance" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS : SEE, FR, vol. VOL. I OF II, 26 septembre 1999 (1999-09-26), pages 216-217, XP002176389 ISBN: 2-912328-12-8
• ERDOGAN T ET AL: "TILTED FIBER PHASE GRATINGS" JOURNAL OF THE OPTICAL SOCIETY OF AMERICA - A, OPTICAL SOCIETY OF AMERICA, WASHINGTON, US, vol. 13, no. 2, 1 février 1996 (1996-02-01), pages 296-313, XP002055129 ISSN: 1084-7529
• HAGGANS C W ET AL: "NARROW-DEPRESSED CLADDING FIBER DESIGN FOR MINIMIZATION OF CLADDINGMODE LOSSES IN AZIMUTHALLY ASYMMETRIC FIBER BRAGG GRATINGS" JOURNAL OF LIGHTWAVE TECHNOLOGY, IEEE. NEW YORK, US, vol. 16, no. 5, 1 mai 1998 (1998-05-01), pages 902-909, XP000772656 ISSN: 0733-8724
• DONG L ET AL: "SUPPRESSION OF CLADDING MODE COUPLING LOSS IN FIBER BRAGG GRATINGS" JOURNAL OF LIGHTWAVE TECHNOLOGY, IEEE. NEW YORK, US, vol. 18, no. 11, novembre 2000 (2000-11), pages 1583-1590, XP000989344 ISSN: 0733-8724

- **LIU Y ET AL: "FABRICATING FIBRE EDGE FILTERS WITH ARBITRARY SPECTRAL RESPONSE BASED ON TILTED CHIRPED GRATING STRUCTURES" MEASUREMENT SCIENCE AND TECHNOLOGY, IOP PUBLISHING, BRISTOL, GB, vol. 10, no. 1, janvier 1999 (1999-01), pages L01-L03, XP000877675 ISSN: 0957-0233**

**Description**

La présente invention concerne le domaine des guides optiques photosensibles adaptés à recevoir une inscription de réseaux de Bragg pour constituer des filtres optiques. L'invention concerne plus particulièrement des filtres égaliseurs de gain.

Les filtres égaliseurs de gain, connus également sous l'acronyme de GFF pour Gain Flattening Filter en anglais, sont constitués en général par des réseaux de Bragg photo inscrits sur des portions de guides d'onde tels que des fibres optiques ou des guides planaires. Un guide d'onde est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_1$ et de la gaine $n_2$ sont tels que $n_1 > n_2$. Comme cela est bien connu, la propagation d'un signal optique dans un guide d'onde monomode se décompose en un mode fondamental guidé dans le coeur et en des modes secondaires guidés sur une certaine distance dans l'ensemble coeur gaine optique, appelés également modes de gaine.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction du coeur et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. De même, pour des guides optiques planaires, le profil d'indice associe une valeur d'indice de réfraction à une distance r au centre du guide, que l'on qualifiera par la suite de distance radiale.

Le coeur et/ou la gaine du guide peuvent être dopés de manière à être rendus photosensibles pour une inscription de réseau de Bragg, par exemple avec du germanium (Ge). On définit ainsi le profil de photosensibilité d'un guide en fonction de l'allure du graphe de la fonction qui associe la distribution radiale de la concentration de dopant photosensible dans le guide.

Des réseaux classiquement utilisés pour des égalisations de gain sont des réseaux en angle ou incliné, connus sous le terme de SBG pour Slanted Bragg Grating en anglais. De tels réseaux sont non réflecteurs et sont conçus pour permettre un couplage du mode fondamental dans les modes de gaine. Il est ainsi possible de s'affranchir des isolateurs optiques indispensables lorsque l'égalisation de gain est réalisée avec des réseaux réflecteurs tels que les réseaux de Bragg droits.

Les filtres égaliseurs de gain sont associés à des amplificateurs optiques répartis régulièrement le long de lignes de transmission. Les amplificateurs optiques ne fournissent généralement pas une amplification égale pour toutes les longueurs d'onde des signaux transmis sur les différents canaux d'une même ligne de transmission.

En particulier, avec le développement des applications de transmission dense par multiplexage en longueur d'onde (DWDM, pour Dense Wavelength Division Multiplexing), les disparités d'amplification sur une bande passante donnée ont tendance à s'accentuer et les tolérances des égaliseurs de gain deviennent de plus en plus faibles, c'est à dire que le filtre égaliseur doit épouser au plus près la courbe d'amplification. Ainsi, les applications DWDM nécessitent la réalisation de filtres de plus en plus étroits présentant des contrastes de plus en plus accentués.

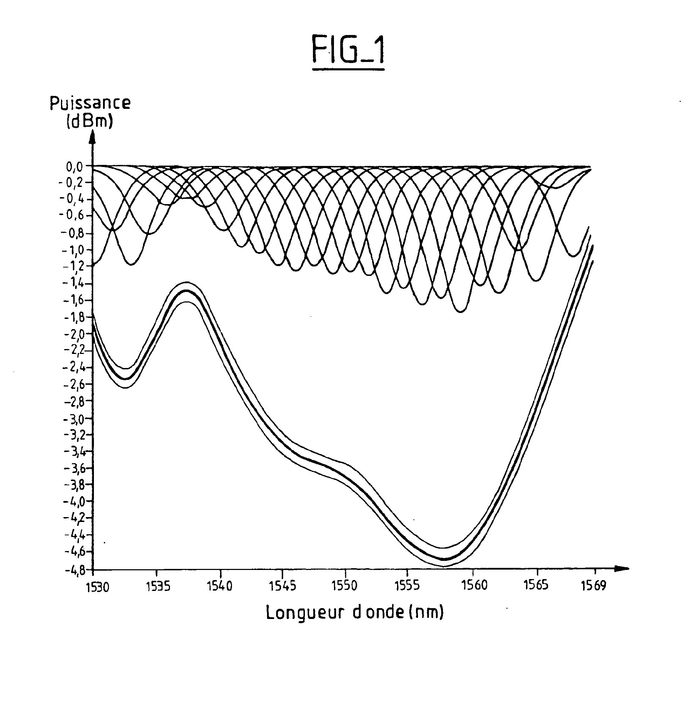

La demande de brevet EP1 359 442 décrit un filtre complexe composé d'une concaténation de réseaux en angle. La réponse spectrale d'un tel filtre est illustrée sur la figure 1. Afin de correspondre au plus près au gabarit de la courbe d'amplification (trait gras), les filtres élémentaires (traits fins) doivent présenter un contraste de plus en plus accentué. Un cahier des charges imposant un contraste de 5 dB sur une bande spectrale de l'ordre de 2nm est courant pour ce genre d'application. A partir de tels filtres élémentaires contrastés, il est possible de réaliser une concaténation de filtres formant un profil d'égalisation complexe correspondant à une courbe d'amplification donnée.

Une solution possible pour réduire la largeur spectrale d'un filtre élémentaire tout en augmentant son taux de réjection (c'est-à-dire en augmentant son contraste) est d'améliorer le couplage de mode entre le mode fondamental et les modes de gaine, et pour ce faire d'augmenter substantiellement l'intégrale de recouvrement entre ces modes. On définit l'intégrale de recouvrement comme l'aire délimitée par le mode fondamental et les modes de gaine, pondérée par le profil de photosensibilité du guide.

Plusieurs techniques ont été proposées dans l'art antérieur pour augmenter cette intégrale de recouvrement. Une première solution peut consister à augmenter le diamètre du coeur afin d'élargir le mode fondamental et augmenter ainsi le recouvrement. Cette solution est cependant limitée par la perte du caractère monomode de la propagation du signal lorsque le diamètre du coeur devient trop grand.

Une autre solution consiste à rendre la gaine photosensible en plus du coeur pour augmenter la pondération de l'aire de recouvrement. Mais cette solution implique une inscription du réseau de Bragg en angle avec une forte inclinaison, au moins 6˚, afin d'éviter un couplage du mode fondamental sur lui-même et donc une réflexion totale du signal. Une solution consiste alors à diminuer la photosensibilité du coeur pour éviter un couplage du mode fondamental sur lui-même pour des réseaux d'angle plus faibles.

Par ailleurs, la réduction de l'angle d'inclinaison permet également de diminuer la largeur spectrale du filtre élémentaire constitué par un réseau en angle. Cependant, la diminution de l'angle reste limitée par la nécessité de conserver une faible contre réflexion du signal, c'est-à-dire de minimiser le couplage du mode fondamental sur lui-même en contra-propagatif.

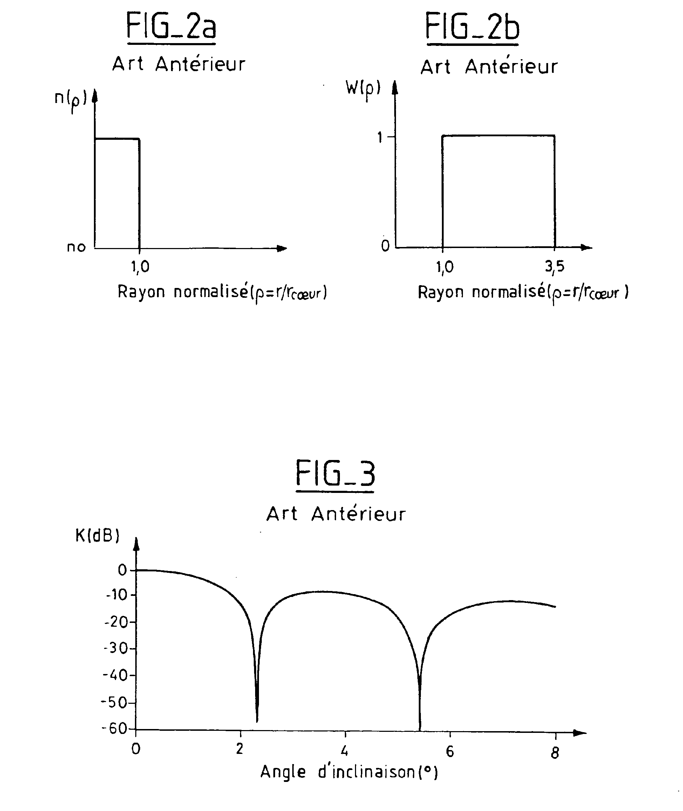

Ainsi, la publication de M.J. Holmes et al, « Ultra Narrowband Optical Fiber Sidetap Filters », ECOC'98, septembre 1998, Madrid, Espagne, p137-138, décrit une fibre monomode dont les profils d'indice et de photosensibilité ont été reportés respectivement sur les figures 2a et 2b. Le profil d'indice est en rectangle avec un saut coeur/gaine. Les unités reportées sur le graphe 2a sont normalisées au rayon du coeur $r_{coeur}$ et à l'indice $n_0$ de la gaine. La gaine a été dopée avec du Germanium et du Bore afin d'être rendue photosensible tout en conservant un indice de réfraction inférieur à l'indice du coeur. Un tel profil de fibre permet une inscription de réseau de Bragg incliné SBG avec un faible angle de 2.3° afin d'obtenir une réponse spectrale contrastée.

La valeur de l'angle d'inscription a été déterminée par le minimum de couplage du mode fondamental sur lui-même en fonction de l'angle $\theta$ du réseau. On détermine ainsi une courbe K($\theta$) reportée sur la figure 3 pour la fibre des figures 2a et 2b.

On rappelle l'expression théorique de K($\theta$) :

$$k(\theta) = \frac{\int E_{core}^2(r).J_0\left(\frac{2\pi.r.\sin(\theta)}{\Lambda}\right).W(r)r.dr}{\int E_{core}^2(r).r.dr} \qquad (1)$$

avec

r, le rayon de la fibre et $\theta$ l'angle du réseau,
$E_{core}$, le champ électrique du mode fondamental,
W(r), le profil de photosensibilité,
$\Lambda$, le pas du réseau de Bragg,
$J_0$, la fonction de Bessel d'ordre 1.

Avec un profil de photosensibilité en rectangle tel que celui de la fibre de la figure 2b, le minimum du couplage du mode fondamental sur lui-même K($\theta$) présente une faible largeur d'angle, de 0.1° à -30dB, ce qui la rend très dépendante de l'angle ; c'est-à-dire que la contre réflexion du signal est minimal pour un angle précis d'inscription du réseau. Un décalage de cet angle entraînera une augmentation brutale de la contre réflexion du signal. On nomme ainsi « nid de réflexion » la tolérance sur l'angle d'inscription du SBG pour lequel le couplage du mode fondamental sur lui-même est minimisé. On constate sur la figure 3 que le nid de réflexion d'un réseau inscrit dans une fibre présentant un profil correspondant aux figures 2a et 2b est très étroit, ce qui complique la fabrication du filtre.

De nombreuses autres publications ont ainsi proposées des profils de photosensibilité adaptés pour réduire la bande passante d'un filtre élémentaire constitué par un SBG. On peut citer par exemple les publications de C.W. Haggens et al. « Narrow-band rejection filter with negligible Backreflection using tilted photoinduced gratings in single mode fibers», IEEE PTL Vol 10, n°5, Mai 1998, de I.Riant et al. « Gain equalisation with optimised Slanted Bragg Grating on adapted fibre for multichannel long haul submarine transmission » OFC Paper ThJ6, et de C. De Barros et al « Optimised C-Band Gain Flattening Filter using Slanted Bragg Technology », ECOC'02, Paper 10.4.1, ainsi que le brevet US-A-6 005 999.

Toutes ces publications proposent d'ajuster les valeurs de photosensibilité du coeur par rapport à la gaine. Cependant, tous ces profils fournissent des nids de réflexion étroits pour les valeurs d'inscription du réseau.

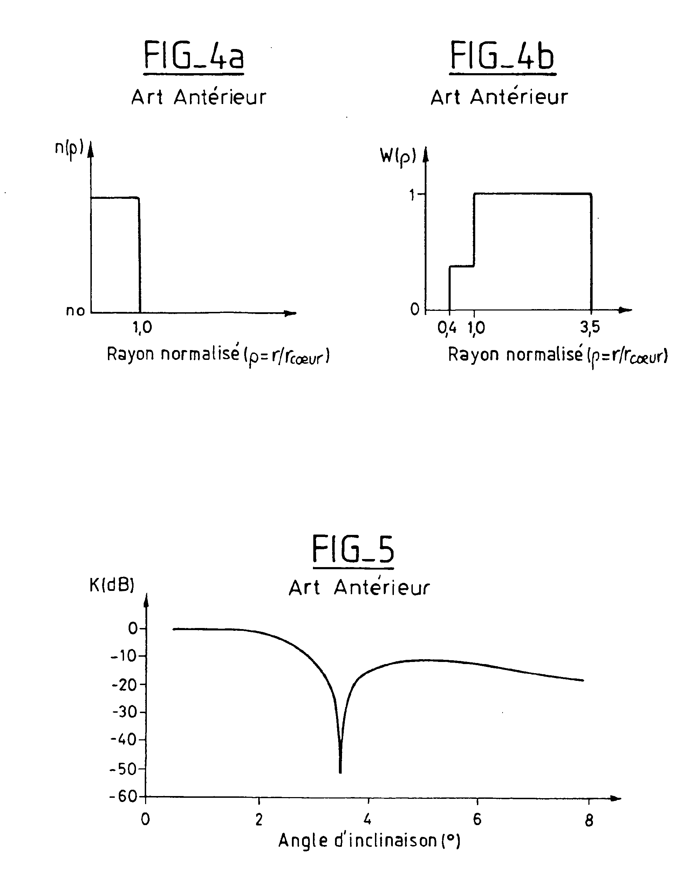

La publication de M.J. Holmes et al."Novel fiber design for narrow-band symmetric response sidetap filters with suppressed leaky mode resonance». ECOC'99, Conference proceedings page 216-217, décrit un autre profil de photosensibilité de fibre monomode à saut d'indice. Les figures 4a et 4b illustrent respectivement les profils d'indice de réfraction et de photosensibilité et la figure 5 illustre le couplage du mode fondamental sur lui-même en fonction de l'angle d'inscription d'un réseau K($\theta$) dans la fibre correspondante.

Le profile de photosensibilité présente un saut dans le coeur de la fibre. Le coeur de la fibre présente ainsi une région centrale dopée avec un dopant non photosensible et une région annulaire dopée avec un dopant photosensible et un dopant non photosensible permettant de maintenir la valeur d'indice de réfraction du coeur constante. La courbe de contre réflexion du signal en fonction de l'angle du réseau k($\theta$) indique un angle d'inscription à 3.5° une largeur d'angle de 0.2° à -30dB. Le « nid de réflexion » est quelque peu élargi par un tel profil de fibre, ce qui autorise une plus grande tolérance lors de l'inscription du réseau SBG.

La demande de brevet EP 1 160 594 A1 décrit une fibre présentant un profil de photosensibilité segmenté dans le coeur et avec une graine non photosensible. Une telle fibre permet une inscription de réseau de Bagg avec un angle de plus de 6˚. La largeur de l'angle à -30dB peut atteindre 0.5˚ avec un tel profil de fibre. Cependant, un angle d'inscription aussi élevé ne permet pas de réaliser un filtre étroit. La bande spectrale du filtre décrit dans ce document est supérieure à 20nm, ce qui ne convient pas pour une application DWDM.

Toutes les solutions de l'art antérieur sont basée sur un profil de photosensibilité introduisant un saut entre le coeur et la gaine du guide optique. L'optimisation de la photosensibilité entre le coeur et la gaine permet d'adapter l'angle d'inscription du réseau, mais pas d'elargir le nid de réflexion de cet angle.

L'invention propose de pallier les inconvénients de l'art antérieur et propose un guide optique présentant des profils d'indice et de photosensibilité spécifiques Le guide est ainsi adapté à recevoir une inscription de réseau incliné avec une largeur d'angle d'inscription augmentée, pour lequel la réflexion du mode de propagation fondamentale sur lui-même est minimisé.

L'invention a ainsi pour objet un guide optique photosensible comprenant un coeur et une gaine définis par un profil d'indice comprenant un saut d'indice, un réseau de Bragg incliné (SBG) inscrit dans le guide avec un angle (θ) donné, et un profil de photosensibilité W(r) tel que le couplage du mode fondamental sur lui-même en contre propagation dans le guide (K(θ)) et sa dérivée (K'(θ)) selon l'angle (θ) soient sensiblement égales à zéro pour ledit angle donné (θ) d'inscription du réseau de. Bragg(SBG), et que l'emplacement radial dut saut d'indice entre le coeur et la gaine du guide est différent de l'emplacement radial d'un saut de photosensibilité.

Selon une caractéristique, le profil de photosensibilité W(r) présente au moins un saut situé dans la gaine du guide.

Selon une caractéristique le profil de photosensibilité W(r) présente au moins un saut situé dans le coeur du guide.

Selon une caractéristique, le profil de photosensibilité W(r) est adapté à l'inscription d'un réseau de Bragg incliné (SBG) avec un angle (θ) compris entre 1˚ et 4,5˚.

Selon une caractéristique, le profil de photosensibilité W(r) est tel que le minimum de couplage du mode fondamental sur lui-même en contre propagation dans le guide (K(θ)) présente une largeur d'angle (Δθ) compris entre 0.3˚ et 0.6˚ autour de l'angle donné (θ) d'inscription du réseau de Bragg (SBG).

L'invention concerne également un filtre optique comprenant au moins un réseau de Bragg en angle (SBG) inscrit dans une portion de guide optique selon l'invention.

Selon une caractéristique, le réseau de Bragg (SBG) présente un angle d'inclinaison compris entre 1˚ et 4.5˚.

Selon une caractéristique, le réseau de Bragg (SBG) présente un pas variable.

L'invention peut avoir pour application un système de transmission optique comprenant un filtre égaliseur de gain comportant une concaténation de filtres optiques selon l'invention.

Les particularités et avantages de l'invention ressortiront plus clairement à la lecture de la description qui suit, faite à titre d'exemple illustratif et non limitatif, en référence aux figures annexées dans lesquelles

- la figure 1, déjà décrite, illustre une réponse spectrale d'un filtre complexe d'égalisation de gain ;
- les figures 2a et 2b, déjà décrites, illustrent respectivement le profil d'indice normalisé et le profil de photosensibilité normalisé d'une première fibre de l'art antérieur ;
- la figure 3, déjà décrite, illustre le couplage du mode fondamental sur lui-même en fonction de l'angle d'inscription du réseau dans une fibre présentant les profils des figures 2a et 2b ;
- les figures 4a et 4b, déjà décrites, illustrent respectivement le profil d'indice normalisé et le profil de photosensibilité normalisé d'une deuxième fibre de l'art antérieur ;
- la figure 5, déjà décrite, illustre le couplage du mode fondamental sur lui-même en fonction de l'angle d'inscription du réseau dans une fibre présentant les profils des figures 4a et 4b ;
- la figure 6 représente des courbes du couplage du mode fondamental et de sa dérivée pour des valeurs données d'angle de réseau et de profils d'indice et de photosensibilité ;
- les figures 7a et 7b, illustrent respectivement le profil d'indice et le profil de photosensibilité d'un guide selon un premier mode de réalisation de l'invention ;
- la figure 8, illustre le couplage du mode fondamental sur lui-même en fonction de l'angle d'inscription du réseau dans un guide présentant les profils des figures 7a et 7b ;
- les figures 9a et 9b, illustrent respectivement le profil d'indice et le profil de photosensibilité d'un guide selon un deuxième mode de réalisation de l'invention ;
- la figure 10 illustre le couplage du mode fondamental sur lui-même en fonction de l'angle d'inscription du réseau dans un guide présentant les profils des figures 9a et 9b ;
- la figure 11 illustre une comparaison théorique et expérimentale du couplage du mode fondamental en fonction de l'angle d'inscription d'un réseau incliné dans une fibre selon l'invention.

Selon l'invention, un guide optique adapté à recevoir une inscription de réseau de Bragg en angle (SBG) présente un profil d'indice de réfraction définissant un coeur et une gaine et un profil de photosensibilité spécifique. Ce profil de photosensibilité W(r) est tel que, pour une valeur d'angle θ donnée d'inscription du réseau SBG, le couplage du mode fondamental sur lui-même en contre propagation dans le guide K(θ) est sensiblement nul, et que sa dérivée K'(θ) selon l'angle θ est également sensiblement égale à zéro. L'annulation de la dérivée en plus du couplage du mode fondamental en fonction de l'angle permet de garantir un nid de réflexion élargi autour de l'angle d'inscription du réseau.

En particulier, le profil de photosensibilité du guide selon l'invention n'est pas limité à une distinction entre le coeur et la gaine de la fibre. La distribution radiale des valeurs de photosensibilité dans le guide est donc indépendante d'un saut d'indice entre le coeur et la gaine.

On ne cherche plus à minimiser seulement la relation (1) précédente du couplage du mode fondamental sur lui-même en contra-propagatif, mais à annuler la double relation :

$$k(\theta) = \int E_{core}^2(r).J_0\left(\frac{2\pi.r.\sin(\theta)}{\Lambda}\right).W(r)r.dr = 0 \quad (2)$$

$$\frac{\partial k(\theta)}{\partial \theta} = k^{'}(\theta) = -\int E_{core}^2(r).J_1\left(\frac{2\pi.r.\sin(\theta)}{\Lambda}\right).W(r).\frac{2\pi}{\Lambda}\cos(\theta).r^2.dr = 0 \quad (3)$$

avec $J_1$ la fonction de Bessel d'ordre 2.

Le champ électrique du mode fondamental, $E_{core}(r)$, est fixé par le profil d'indice du guide. Ce profil est de préférence un profil rectangulaire avec un saut entre le coeur et la gaine du guide, qui constitue un profil classique de fibre monomode par exemple. Cependant, un autre profil d'indice pourrait être choisi, tel qu'un profil en gradient par exemple. La seule caractéristique définie par le profil d'indice impactant la définition du profil de photosensibilité est le profil du champ électrique $E_{core}(r)$ correspondant au mode fondamental.

Le pas $\Lambda$ du réseau SBG est fixé par la longueur d'onde du signal à filtrer.

Selon l'invention, on peut fixer l'angle θ du réseau SBG permettant de répondre aux contraintes de largeur spectrale du filtre, et déterminer le profil de photosensibilité correspondant à ces contraintes. A partir de la relation (1) précédente, on peut calculer, par transformation de Hankel inverse, l'expression du profil de photosensibilité en fonction du profil du champ électrique pour une fonction donnée de couplage du mode fondamental sur lui-même en fonction de l'angle θ :

$$W(r) = \frac{1}{E_{core}^2(r)}.\int k(\theta).J_0(\frac{2\pi.r.\sin(\theta)}{\Lambda}).\frac{\sin(\theta).\cos(\theta)}{\Lambda^2}d\theta \quad (4)$$

Une telle expression est cependant difficile à résoudre avec précision.

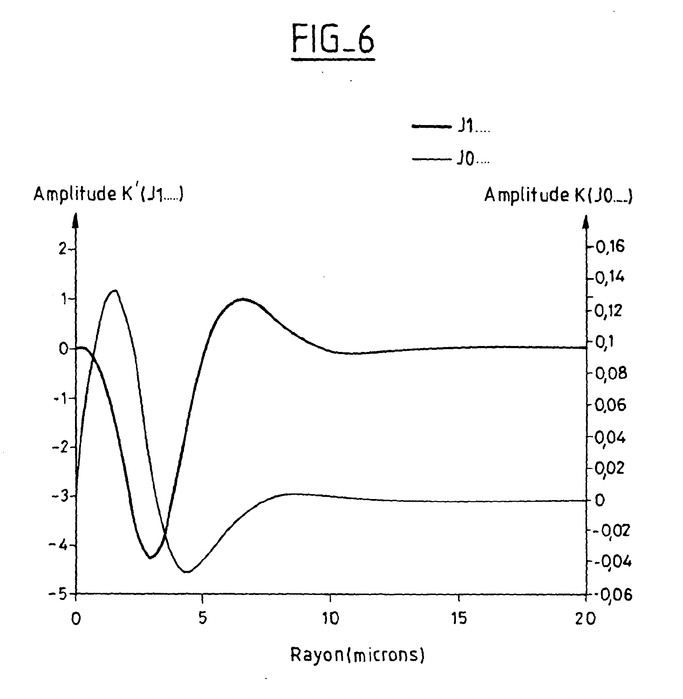

On peut donc chercher à déterminer le profil de photosensibilité adéquat en traçant les relations (2) et (3). Les courbes correspondant à ces relations en fonction de r sont reportées sur la figure 6 en fixant W(r)=1, $\Lambda$=0.55nm, θ=3.75˚ et en modélisant une fibre avec un rayon de coeur de 4 microns et un saut d'indice entre le coeur et la gaine de $4.4.10^{-3}$.

On doit alors déterminer la distribution radiale à attribuer à W(r) permettant d'annuler les intégrales de ces deux fonctions. On peut décomposer les intégrales en N segments et déterminer le poids de W(r) sur chaque segment. Pour cela, on suppose que le profil de photosensibilité est en échelon, avec des valeurs successives $\alpha_n$.

On doit alors résoudre la double équation suivante :

$$k(\theta) = \sum_2^N \alpha_n \int_{Rn-1}^{Rn} E_{core}^2(r).J_0\left(\frac{2\pi.r.\sin(\theta)}{\Lambda}\right).r.dr = \sum_2^N \alpha_n k_n(\theta) = 0$$

$$k^{'}(\theta) = -\sum_2^N \alpha_n \int_{Rn-1}^{Rn} E_{core}^2(r).J_1\left(\frac{2\pi.r.\sin(\theta)}{\Lambda}\right).\frac{2\pi}{\Lambda}\cos(\theta).r^2.dr = \sum_2^N \alpha_n k_n^{'}(\theta) = 0$$

$$(5)$$

On peut fixer le nombre d'échelons, c'est-à-dire fixer N, puis déterminer les valeurs de $\alpha_n$ comprises entre 0 et 1 avec $\alpha_N$=1, et les valeurs de $R_n$ correspondantes, avec $R_N$=20μm.

$R_N$ est fixé à 20$\mu$m, car au-delà de ce rayon, le champ du mode fondamental est nul. Il n'est donc pas nécessaire d'étendre la zone de photosensibilité au-delà de ce rayon.

$\alpha_n$ est fixé à 1, car le couplage dans la gaine doit être toujours maximum sachant que le champ du mode fondamental tend vers zéro dans la gaine.

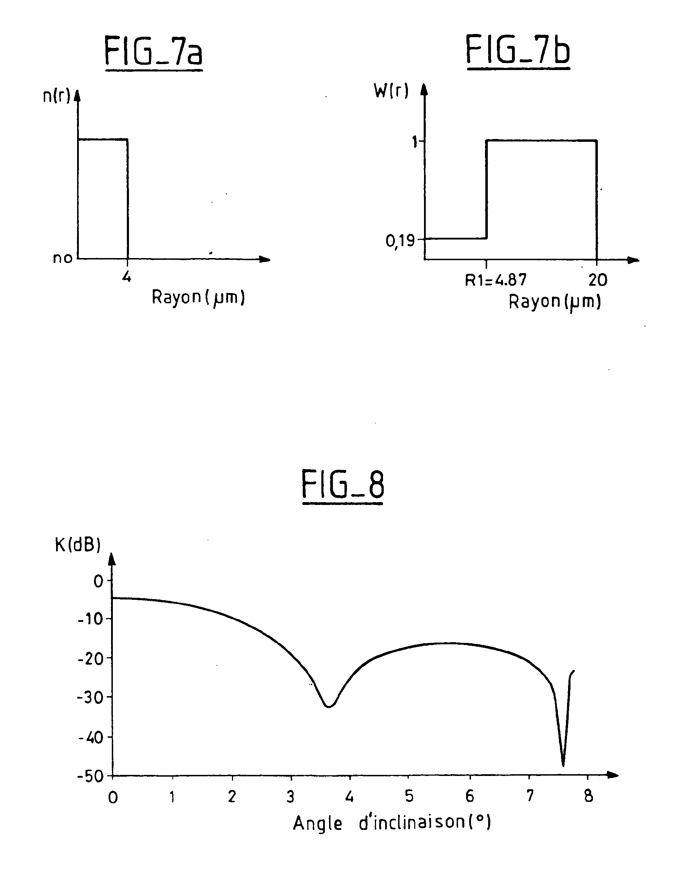

Les figures 7a et 7b illustrent les profils d'indice et de photosensibilité d'une fibre selon un premier mode de réalisation de l'invention, pour une application avec un profil d'indice à deux échelons (N=2). La double équation (5) fournit alors :

$$\alpha_1 = \frac{k_2}{k_1} = \frac{k_2'}{k_1'} \ .$$

Avec les valeurs précédemment fixées de profils d'indice et de caractéristiques du réseaux de Bragg, on obtient $\alpha_1$=0.19 et $R_1$=4.87$\mu$m. On voit bien que le profil d'indice est complètement décorrélé du profil de photosensibilité, le saut de photosensibilité n'étant pas confondu avec le saut d'indice de la fibre.

On obtient alors la courbe de contre propagation du mode fondamental du signal illustrée sur la figure 8. Pour un angle d'inscription fixé de 3.75˚, la largeur à -30dB est de 0.4˚, ce qui constitue un nid de réflexion nettement élargi par rapport aux courbes de contre réflexion de l'art antérieur pour des angles d'inscription aussi faible.

D'autres exemples numériques ont été calculés de la même façon pour un profil de photosensibilité en deux échelons. Si l'angle d'inscription du SBG est de 2.5˚, on obtient le couple $\alpha_1$=0.05 et $R_1$=6.3$\mu$m; et si l'angle d'inscription du SBG est de 4.35˚, on obtient le couple $\alpha_1$= 0.3 et $R_1$=4.32$\mu$m.

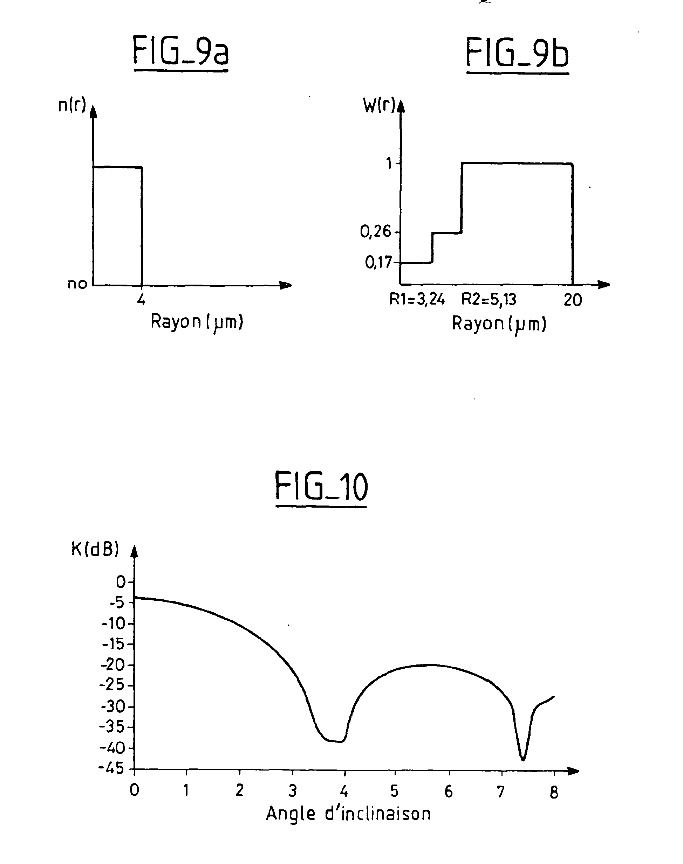

Les figures 9a et 9b illustrent les profils d'indice et de photosensibilité d'une fibre selon un deuxième mode de réalisation de l'invention, pour une application avec un profil de photosensibilité à trois échelons (N=3). La double équation (5) fournit alors :

$$\alpha_1 k_1 + \alpha_2 k_2 + k_3 = 0$$

$$\alpha_1 k_1' + \alpha_2 k_2' + k_3' = 0 \ .$$

On peut fixer par exemple que les rayon des deux segments $R_1$ et $R_2$ correspondent aux racines des fonctions de Bessel $J_0$ et $J_1$. On peut alors calculer les aires $k_1$, $k_2$, $k_3$, $k'_1$, $k'_2$, $k'_3$ et résoudre l'équation de double degré pour déterminer $\alpha_1$ et $\alpha_2$:

$$\begin{cases} \alpha_1 = \dfrac{k_3'.k_1 - k_1'.k_3}{k_1'.k_2 - k_2'.k_1} \\ \alpha_2 = \dfrac{k_3'.k_2 - k_2'.k_3}{k_2'.k_1 - k_1'.k_2} \end{cases}$$

Avec les valeurs précédemment fixées de profils d'indice et de caractéristiques du réseaux de Bragg, on obtient $\alpha_1$=0.176 et $\alpha_2$=0.26, avec $R_1$=3.24$\mu$m et $R_2$=5.13$\mu$m. Bien sûr, d'autres valeurs de $R_1$ et $R_2$ peuvent être fixées.

On obtient alors la courbe du couplage du mode fondamental sur lui-même illustrée sur la figure 10. Pour un angle d'inscription fixé de 3.75˚, la largeur à -30dB est de 0.7˚.

L'invention permet donc de réaliser un guide optique adapté à recevoir une inscription de réseau de Bragg incliné avec un angle choisi tout en augmentant la tolérance de cet angle d'inscription. On peut ainsi déterminer l'angle du SBG par rapport aux applications souhaitées et réaliser le guide approprié qui permettra de recevoir ledit réseau avec un faible taux de rejet lors de la fabrication industrielle du filtre.

Par exemple, une fibre selon l'invention peut être fabriquée en contrôlant de manière précise les concentrations de dopant lors de la réalisation de la préforme. En particulier les concentrations de Germanium (Ge) de Phosphore (P) et de Fluor (F).

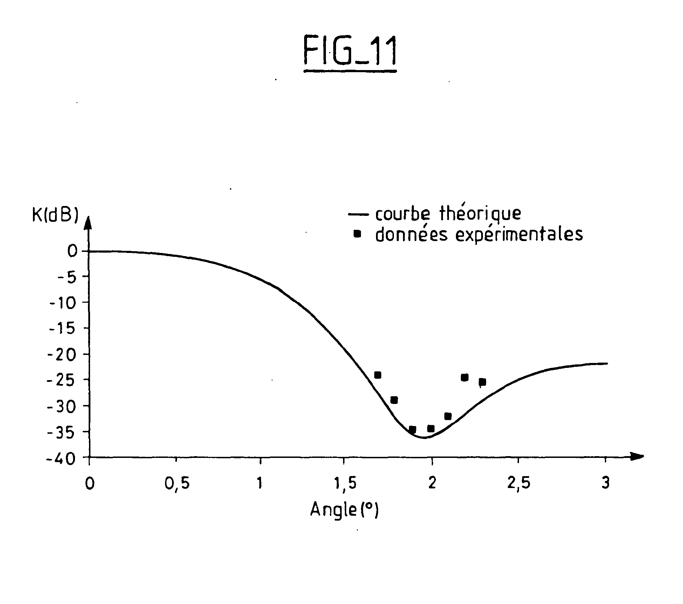

En référence à la figure 11, un réseau de Bragg a pu être inscrit avec un angle d'inclinaison dans la fibre variant de 1.7˚ à 2.3˚ dans une fibre selon l'invention. La figure 11 représente la contre réflexion théorique et celle obtenue expérimentalement. Le « nid de réflexion » du minimum de contre réflexion dans une telle fibre est de quasiment 1˚, ce qui permet une meilleurs tolérance de fabrication et permet d'avoir un niveau de réflexion expérimental suffisamment faible (identique aux prévisions théoriques).

**Revendications**

1. Guide optique photosensible comprenant

   - un coeur et une gaine définis par un profit d'indice comprenant un saut d'indice,
   - un réseau de Bragg incliné (SBG) inscrit dans le guide avec un angle (θ) donné, et
   - un profil de photosensibilité W(r) tel que

      - le couplage du mode fondamental sur lui-même en contre propagation dans le guide (K(θ) et sa dérivée (K'(θ)) selon l'angle (θ) soient sensiblement égales à zéro pour ledit angle donné (θ) d'inscription du réseau de Bragg (SBG), et que
      - le profil de photosensibité W(r) présente au moins un saut de photosensibilité,

   **caractérisé en ce que** l'emplacement radial du saut d'indice entre le coeur et la gaine du guide est différend de l'emplacement radial d'un saut de photosensibilité.

2. Guide selon la revendication 1, dans lequel le profil de photosensibilité W(r) présente au moins un saut situé dans la gaine du guide.

3. Guide selon la revendication 1 dans lequel le profil de photosensibilité W(r) présente au moins un saut situé dans le coeur du guide.

4. Guide selon l'une des revendications 1 à 3, dans lequel le réseau de Bragg incliné (SBG) est incrit dans le guide avec un angle (θ) compris entre 1˚ et 4.5˚

5. Guide selon l'une des revendications. 1 à 4, dans lequel le profil de photosensibilité W(r) est tel que le minimum de couplage du mode fondamental sur lui-même en contre propagation dans le guide (K(θ)) présente une largeur d'angle (Δθ) compris entre 0,3˚ et 0,6˚ autour de l'angle donné (θ) d'inscription du réseau de Bragg (SBG).

6. filtre optique comprenant au moins un réseau de Bragg en angle (SBG) inscrit dans une portion de guide optique selon l'une des revendications 1 à 5,

7. Filtre optique selon la revendication 6, dans lequel le réseau de Bragg (SBG) présente un angle d'inclinaison compris entre 1˚ et 4,5˚.

8. Filtre optique selon l'une des revendications 6 et 7, dans le réseau de Bragg (SBG) présente un pas (Λ) variable.

9. Système de transmission optique comprenant un filtre égaliseur de gain comportant une concaténation de filtres optiques selon l'une des revendications 6 à 8.

**Claims**

1. A photo-sensitive optical guide comprising:

   - a core and a sheath defined by a refractive index profile comprising an index step,
   - a slanted Bragg grating (SBG) inscribes within the guide with a given angle (θ), and
   - a photosensitivity profile W(r) such that

      - the coupling of the fundamental mode onto itself when counter-propagating within the guide (K(θ)) and its derivative (K'(θ)) along the angle (θ) are roughly equal to zero for said given writing angle (θ) of the Bragg grating, and that
      - the photosensitivity profile W(r) has at least one photosensitivity step,

**characterized in that** the radial location of the index step between the core and the sheath of the guide is different from the radial location of the photosensitivity step.

2. A guide according to claim 1, wherein the photosensitivity profile W(r) has at least one step located within the guide's sheath.

3. A guide according to claim 1, wherein the photosensitivity profile W(r) has at least one step located within the guide's core.

4. A guide according to one of claims 1 to 3, wherein the slanted Bragg grating (SBG) is inscribed within the guide with an angle ($\theta$) between 1˚ and 4.5˚.

5. A guide according to one of claims 1 to 4, wherein the photosensitivity profile W(r) is such that the minimum coupling of the fundamental mode onto itself when counter-propagating within the guide (K($\theta$)) has an angle width ($\Delta\theta$) between 0.3˚ and 0.6˚ around the given writing angle ($\theta$) of the Bragg grating (SBG).

6. An optical filter comprising at least one slanted Brags grating (SBG) inscribed within a portion of the optical guide in accordance with one of claims 1 to 5.

7. An optical filter according to claim 6, wherein the Bragg grating (SBG) has an angle of inclination between 1 and 4.5˚.

8. An optical filter according to one of the claims 6 and 7, wherein the Bragg grating (SBG) has a variable pitch ($\Lambda$).

9. An optical transmission system comprising a gain-equalization filter comprising a concatenation of optical filters according to one of claims 6 to 8.


**Patentansprüche**

1. Lichtempfindlicher optischer Wellenleiter, umfassend:

- Einen Kern und einen Mantel, definiert von einem Indexzprofil mit einem Stufenindex,
- ein schräges Bragg-Gitter (SBG), welches mit einem gegebenen Winkel ($\theta$) im Wellenleiter eingeschrieben, und
- ein Lichtempfindlichkeitsprofil W(r), so dass

- die Kopplung des Grundmodus auf sich selbst in Gegenausbreitung im Wellenleiter (K($\theta$)) und dessen Ableitung (K'($\theta$)) gemäß dem Winkel ($\theta$) für den besagten gegebenen Einschreibwinkel ($\theta$) im Bragg-Gitter (SBG) im Wesentlichen gleich Null sind, und dass
- das Lichtempfindlichkeitsprofil (W(r) mindestens eine Lichtempfindlichkeitsstufe aufweist,

**dadurch gekennzeichnet, dass** die radiale Anordnung des Stufenindex zwischen dem Kern und dem Mantel des Wellenleiters eine andere ist als die radiale Anordnung einer Lichtempfindlichkeitsstufe.

2. Wellenleiter nach Anspruch 1, wobei das Lichempfindlichkeitsprofil W(r) mindesten eine Stufe im Mantel des Wellenleiters aufweist.

3. Wellenleiter nach Anspruch 1, wobei das Lichtempfindlichkeitsprofil W(r) mindestens eine Stufe im Kern des Wellenleiters aufweist.

4. Wellenleiter nach einem der Ansprüche 1 bis 3, wobei das schräge Bragg-Gitter (SBG) mit einem Winken ($\theta$) zwischen 1˚ und 4,5˚ im Wellenleiter eingeschrieben ist.

5. Wellenleiter nach einem der Anspruche 1 bis 4, wobei das Lichtempfindlichkeitsprofil W(r) derart ist, dass die Mindestkopplung des Grundmodus auf sich selbst in Gegenausbreitung im Wellenleiter (K($\theta$)) eine Winkelbreite ($\Delta\theta$) zwischen 0,3˚ und 0,6˚ um den gegebenen Einschreibwinkel ($\theta$) des Bragg-Gitters (SBG) herum aufweist.

6. Optischer Filter mit mindestens einem winkligen Bragg-Gitter (SBG), welches in einem Abschnitt eines optischen Wellenleiters nach einem der Ansprüche 1 bis 5 eingeschrieben ist.

**7.** Optischer Filter nach Anspruch 6, wobei das Bragg-Gitter (SBG) einen Neigungswinkel zwischen 1˚ und 4,5˚ aufweist.

**8.** Optischer Filter nach einem der Ansprüche 6 und 7, wobei das Bragg-Gitter (SGB) einen variablen Abstand ($\Lambda$) aufweist.

**9.** Optisches Übertragungssystem mit einem Verstärkungsentzerrungsfilter, welcher eine Verknüpfung von optischen Filtern nach einem der Ansprüche 6 bis 8 umfasst.

# FIG_1

## FIG_2a
### Art Antérieur

$n(\rho)$

$n_0$

$1,0$

Rayon normalisé $(\rho = r/r_{cœur})$

## FIG_2b
### Art Antérieur

$W(\rho)$

1

0

$1,0$    $3,5$

Rayon normalisé $(\rho = r/r_{cœur})$

## FIG_3
### Art Antérieur

$K(dB)$

0
-10
-20
-30
-40
-50
-60

0    2    4    6    8

Angle d'inclinaison (°)

## FIG_4a
### Art Antérieur

Rayon normalisé ($\rho = r/r_{cœur}$)

## FIG_4b
### Art Antérieur

Rayon normalisé ($\rho = r/r_{cœur}$)

## FIG_5
### Art Antérieur

Angle d'inclinaison (°)

# FIG_6

——— J1....
——— J0....

Amplitude K'(J1....)          Amplitude K(J0__)

Rayon(microns)

# FIG_7a

# FIG_7b

# FIG_8

# FIG_9a

n(r)

no          4

Rayon (µm)

# FIG_9b

W(r)

1

0,26

0,17

R1=3,24    R2=5,13    20

Rayon (µm)

# FIG_10

K(dB)

0
-5
-10
-15
-20
-25
-30
-35
-40
-45

0   1   2   3   4   5   6   7   8

Angle d'inclinaison

# FIG_11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1359442 A
- US 6005999 A
- EP 1160594 A1

**Littérature non-brevet citée dans la description**

- **M.J. Holmes et al.** Ultra Narrowband Optical Fiber Sidetap Filters. *ECOC'98,* Septembre 1998, 137-138, ECOC'98
- **C.W. Haggens et al.** Narrow-band rejection filter with negligible Backreflection using tilted photoinduced gratings in single mode fibers. *IEEE PTL,* Mai 1998, vol. 10 (5
- **I.Riant et al.** Gain equalisation with optimised Slanted Bragg Grating on adapted fibre for multichannel long haul submarine transmission. *OFC Paper ThJ6*
- **C. De Barros et al.** Optimised C-Band Gain Flattening Filter using Slanted Bragg Technology. *ECOC'02*
- **M.J. Holmes et al.** Novel fiber design for narrow-band symmetric response sidetap filters with suppressed leaky mode resonance. *ECOC'99, Conference proceedings,* 216-217